# EUROPEAN PATENT SPECIFICATION

(11) **EP 2 793 336 B1**
(45) Date of publication and mention of the grant of the patent: **15.01.2020**
(21) Application number: 12857253.4
(22) Date of filing: 14.12.2012
(51) Int. Cl.: H02G 3/08, H02G 3/10, H02G 3/14

(54) **SYSTEM FOR ANCHORING A RACK TO AN ENCLOSURE FOR ELECTRICAL MECHANISMS**
SYSTEM ZUR VERANKERUNG EINES GESTELLS AN EINEM GEHÄUSE FÜR ELEKTRISCHE MECHANISMEN
SYSTÈME DE FIXATION D'UN BÂTI SUR UNE ENVELOPPE POUR MÉCANISMES ÉLECTRIQUES

(30) Priority: 14.12.2011 ES 201132004
(43) Date of publication of application: 22.10.2014
(73) Proprietor: Simon, S.A., 08013 Barcelona (ES)
(72) Inventor: MORET CODINA, Ma. Cristina, 08021 Barcelona (ES)
(74) Representative: Espiell Volart, Eduardo Maria
(86) International application number: PCT/ES2012/000311
(87) International publication number: WO 2013/087958

(56) References cited:
- ES-T3- 2 099 562
- ES-U- 1 066 319
- ES-U- 1 068 531
- GB-A- 2 229 869

## Description

The object of the present invention is an attachment system between a support frame, housing electrical devices, and its respective enclosure, the support frame itself and the enclosure itself.

### STATE OF THE ART

In current electrical installations, devices that are fixed to support frames designed to be immediately incorporated inside a junction box, have the practical disadvantage that when the back of these devices, where the electrical wiring is located, must be accessed, the corresponding support frame must be dissembled or separated so that the back area becomes accessible and can be manipulated in situ.

Spanish Utility Model ES1066319U discloses a channel for electric cables. This channel might comprise one or several partitions held in place with a stiffener. The stiffener is affixed to the channel through a flange on each side.

All of this represents an increase in the amount of time employing skilled workforce, with the subsequent increase in cost of installation or maintenance and repair activities.

### OBJECT OF THE INVENTION

This invention is presented with the aim of offering a solution for the abovementioned disadvantages, and is essentially characterized in that it is an attachment system between a support frame or several support frames that house the electrical devices and its corresponding enclosure, which have some longitudinal guides, whereby the support frames are fitted by pressing to said guides through their ends, also achieving the pivoting of the support frames themselves, therefore obtaining an improvement in the installation of the electrical devices.

In order to complement the aforementioned description, a set of drawings is attached, where, with an illustrative, non-limiting character, a preferred embodiment of the attachment system, the pivoting support frames and the enclosure itself have been represented.

In the drawings,
- Figure 1: is a perspective view and its exploded view of the enclosure for electrical devices, composed of its frame, its base and provided with three pivoting support frames;

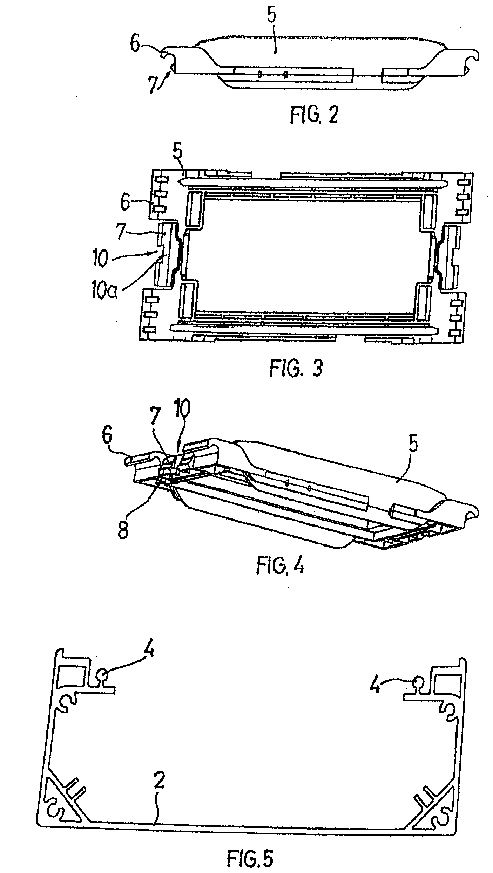

- Figure 2: is a profile view of one of the support frames;
- Figure 3: is a plan view of the support frame corresponding to the previous figure;
- Figure 4: is a perspective view from below of the same support frame;
- Figure 5: is a schematic section of the base of the enclosure for electrical devices;

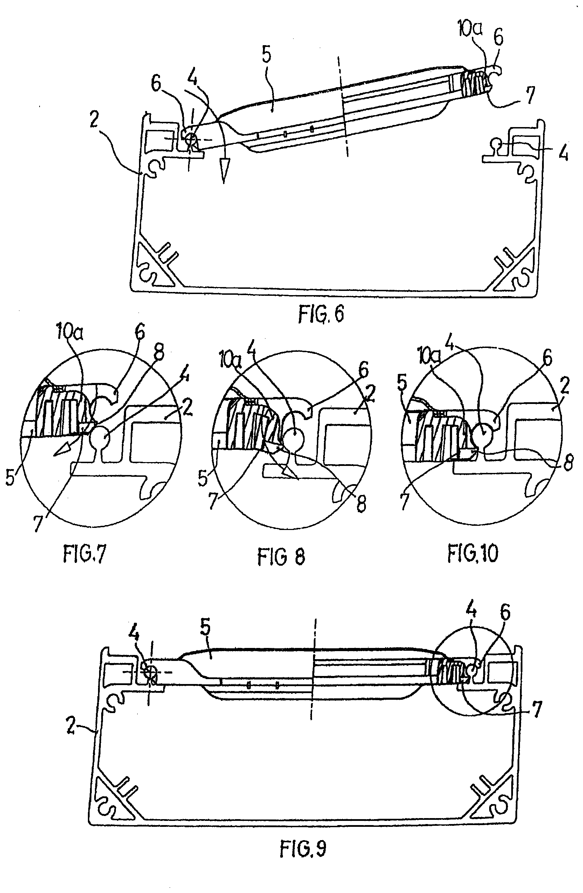

- Figure 6: is a complementary view of the previous figure where the beginning of the placement of a pivoting support frame has been drawn, after one of its ends has been placed on the opposite guide, on which it will pivot;
- Figure 7: is a detail, drawn on a larger scale, of the operational sequence of the placement of the support frame's end, according to the previous figure, before fitting it on the fixing guide in the base of the enclosure.
- Figure 8: is another detail, similar to previous figure, showing the continuation of the sequence of the fitting of the support frame's end, due to the elasticity of its central teeth, on the guide's base;
- Figure 9: shows again, schematically and in a transversal section, the enclosure of the box with the support frame in place, positioning the end on which it will pivot and the opposite end fitted over the corresponding guide of the base;
- Figure 10: draws, in detail and on a larger scale similar to previous figures 7 and 8, the end of the sequence of the fitting of the support frame's end on the corresponding guide of the base;

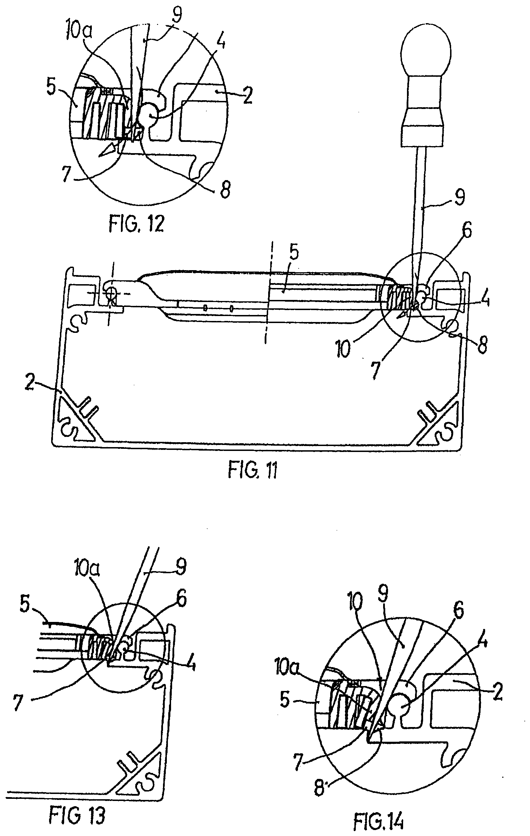

- Figure 11: is a complementary view of figure 9, where the beginning of the removal of an end of the pivoting support frame, with the aid of a tool, has been drawn;
- Figure 12: is a detail, drawn on a larger scale, of the insertion of the tool for the removal of the support frame's end, according to the previous figure;
- Figure 13 :: is another detail, similar to the previous figure, showing the continuation of the sequence of the removal of the support frame's end, when the tool puts pressure and bends the central teeth to remove the support frame's end; and
- Finally, figure 14 :: is a detail drawn on a larger scale of the pressure and bending of the central teeth by the tool.

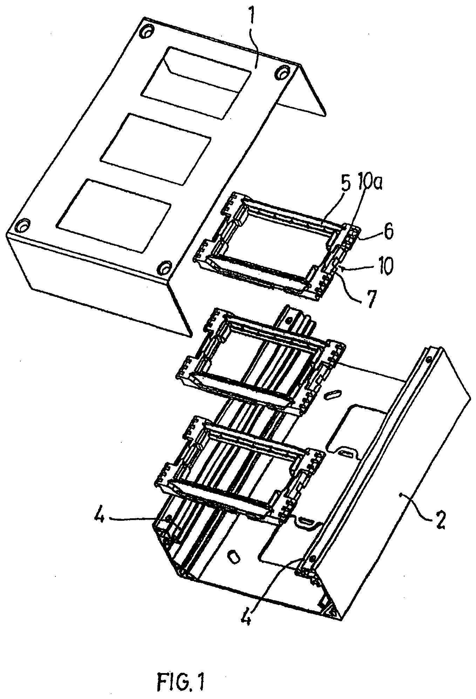

According to these drawings, and specially with figure 1 , it is shown that the attachment system between the support frame and its enclosure for electrical devices comprises an enclosure and a support frame -5-. The enclosure, in turn, is composed of a lid -1- and a base -2-, this base -2- can be either a box for electrical material or part of a metal profile.

The base -2- of the enclosure has two longitudinal cylindrical guides -4-on both sides of its opening.

On the other hand, the support frame -5- has on its two ends, on both sides thereof, an elongation in the shape of a hook -6-, complemented by two central teeth -7- on each end, which adopt, on their lower part, the shape of a ratchet -8-, with its retention edge facing upwards, and between the two central teeth -7- of each end of a hollow -10-.

The procedure for fitting the support frame -5- in the base -2- of the enclosure starts by placing one of the ends of the support frame -5- in one of the two cylindrical guides -4- of the base -2- and pivoting the other end of the support frame -5- towards the other free cylindrical guide -4-. Once the central teeth -7-of the free end contacts the corresponding cylindrical guide -4-, due to the flexibility of the central teeth -7-, these central teeth -7- flex towards the interior of the support frame -5- allowing the pivoting movement of said support frame - 5-. Once the cylindrical guide -4- stops putting pressure on the central teeth -7-, these central teeth -7- go back to their initial position and fasten the free end of the support frame -5- in the cylindrical guide -4-, the elongation with the shape of a hook -6- being coincident with the upper part of the guide -4- and the ratchet - 8- of the central teeth -7- located under said cylindrical guide -4-.

The procedure for removing the support frame -5- is performed with the aid of a proper tool -9-, whose end is inserted above any of the ends of the support frame -5-, through the hollow -10- between the central teeth -7-, leaning against the cylindrical guide -4-. Putting lateral pressure towards the interior of the support frame -5-, will cause the inward movement of the teeth -7- located by the hollow -10-, over its upper wall -10a-, the tool -9- pries up, detaching the central teeth -7- under the guide -4- and allowing for the pivoting of the support frame - 5-.

Being the object of the present invention sufficiently described, it must be noted that any variation in dimensions, shape, finishes and types of materials used in the embodiment of the aforementioned box with pivoting racks, will not alter the essentiality of this invention, which will be summarized in the following claims.

## Claims

1. Attachment system between a support frame and an enclosure for electrical devices, that comprises:
• An enclosure formed by a lid (1) and a base (2) which has a longitudinal cylindrical guide (4) in at least one of the sides of its opening **characterized in that** the attachment system also comprises
• A support frame (5) which has, on both sides of at least one of its two ends, two elongations in the shape of a hook (6) and at least a central tooth (7) which adopts, on its lower part, the shape of a ratchet (8), with its retention edge facing upwards.

2. Attachment system between a support frame and an enclosure for electrical devices, according to the previous claim, **characterized in that** the support frame (5) has in one of its ends, two elongations in the shape of a hook (6) on both sides of said end, and two central teeth (7).

3. Attachment system between a support frame and an enclosure for electrical devices, according to claim 1, **characterized in that** the base (2) of the enclosure has two longitudinal cylindrical guides (4) and **in that** the support frame (5) has in its two ends, on both sides, two elongations in the shape of a hook (6), complemented by at least a central tooth (7) on each end, which adopts, on its lower part, the shape of a ratchet (8) with its retention edge facing upwards.

4. Attachment system between a support frame and an enclosure for electrical devices, according to the previous claim **characterized in that** the support frame (5) has two central teeth (7) on each end.

5. Attachment system between a support frame and an enclosure for electrical devices, according to claims 2 and 4**characterized in that** the support frame (5) has a hollow (10) between its two central teeth (7) of each end.

6. Support frame for electrical devices with the attachment system according to the previous claims.

## Patentansprüche

1. Befestigungssystem zwischen einem Tragrahmen und einem Gehäuse für elektrische Geräte, das umfasst:
• ein Gehäuse, das aus einem Deckel (1) und einem Unterteil (2) besteht, das an mindestens einer Seite seiner Öffnung eine zylindrische Längsführung (4) aufweist, **dadurch gekennzeichnet, dass** das Befestigungssystem auch Folgendes umfasst:
• einen Tragrahmen (5), der auf beiden Seiten von mindestens einem seiner beiden Enden zwei Verlängerungen in Form eines Hakens (6) und mindestens eines zentralen Zahns (7) aufweist, der auf seinem unteren Teil die Form einer Ratsche (8) mit nach oben weisender Haltekante annimmt.

2. Befestigungssystem zwischen einem Tragrahmen und einem Gehäuse für elektrische Geräte nach dem vorherigen Anspruch, **dadurch gekennzeichnet, dass** der Tragrahmen (5) an einem seiner Enden zwei Verlängerungen in Form eines Hakens (6) an beiden Seiten des Endes und zwei zentrale Zähne (7) aufweist.

3. Befestigungssystem zwischen einem Tragrahmen und einem Gehäuse für elektrische Geräte nach Anspruch 1, **dadurch gekennzeichnet, dass** das Unterteil (2) des Gehäuses zwei zylindrische Längsführungen (4) aufweist und dass der Tragrahmen (5) an seinen beiden Enden auf beiden Seiten zwei hakenförmige Verlängerungen (6) aufweist, ergänzt durch mindestens einen zentralen Zahn (7) an jedem Ende, welcher auf seinem unteren Teil die Form einer Ratsche (8) mit nach oben weisender Haltekante annimmt.

4. Befestigungssystem zwischen einem Tragrahmen und einem Gehäuse für elektrische Geräte nach dem vorhergehenden Anspruch, **dadurch gekennzeichnet, dass** der Tragrahmen (5) an jedem Ende zwei zentrale Zähne (7) aufweist.

5. Befestigungssystem zwischen einem Tragrahmen und einem Gehäuse für elektrische Geräte nach den Ansprüchen 2 und 4, **dadurch gekennzeichnet, dass** der Tragrahmen (5) zwischen seinen beiden zentralen Zähnen (7) an jedem Ende eine Vertiefung (10) aufweist.

6. Tragrahmen für elektrische Geräte mit dem Befestigungssystem nach den vorhergehenden Ansprüchen.

## Revendications

1. Système d'ancrage entre un châssis de support et un boîtier pour appareils électriques, qui comprend :
• Un boîtier formé d'un couvercle (1) et d'une base (2) qui présente un guide cylindrique longitudinal (4) dans au moins l'un des côtés de son ouverture, **caractérisé en ce que** le système d'ancrage comprend également
• Un châssis de support (5) qui a, sur les deux côtés d'au moins l'une de ses deux extrémités, deux prolongations en forme de crochet (6) et au moins une dent centrale (7) qui adopte, sur sa partie inférieure, la forme d'un cliquet (8), avec son bord de rétention vers le haut.

2. Système d'ancrage entre un châssis de support et un boîtier pour appareils électriques, selon la revendication précédente, **caractérisé en ce que** le châssis de support (5) a à l'une de ses extrémités, deux prolongements en forme de crochet (6) sur les deux côtés de ladite extrémité et deux dents centrales (7).

3. Système d'ancrage entre un châssis de support et un boîtier pour appareils électriques, selon la revendication 1, **caractérisé en ce que** la base (2) du boîtier a deux guides cylindriques longitudinaux (4) et **en ce que** le châssis de support (5) a à ses deux extrémités, sur les deux côtés, deux prolongements en forme de crochet (6), complétés par au moins une dent centrale (7) à chaque extrémité, qui adopte, sur sa partie inférieure, la forme d'un cliquet (8) avec son bord de rétention vers le haut.

4. Système d'ancrage entre un châssis de support et un boîtier pour appareils électriques, selon la revendication précédente, **caractérisé en ce que** le châssis de support (5) a deux dents centrales (7) à chaque extrémité.

5. Système d'ancrage entre un châssis de support et un boîtier pour appareils électriques, selon les revendications 2 et 4, **caractérisé en ce que** le châssis de support (5) a un creux (10) entre ses deux dents centrales (7) de chaque extrémité.

6. Châssis de support pour appareils électriques avec le système d'ancrage selon les revendications précédentes.
